# EUROPÄISCHE PATENTANMELDUNG

(11) **EP 1 002 712 A2**
(43) Veröffentlichungstag der Anmeldung: **24.05.2000**
(21) Anmeldenummer: 99121933.8
(22) Anmeldetag: 08.11.1999
(51) Int. Cl.: B62D 25/04

(54) **Anordnung mit einer Frontsäule für einen Karosserierahmen eines Kraftfahrzeugs**

(30) Priorität: 19.11.1998 DE 19853338
(71) Anmelder: Volkswagen Aktiengesellschaft, 38436 Wolfsburg (DE)
(72) Erfinder: Morsch, Klaus-Dieter, 38124 Braunschweig (DE); Friedewald, Klaus, Dr., 38104 Braunschweig (DE); Ensslen, Arnold, 38446 Wolfsburg (DE); Weiss, Andreas, 38440 Wolfsburg (DE); Pfeiffer, Peter, 38165 Lehre-Wendhausen (DE); Hoffmann, Uwe, 38165 Flechtorf (DE)

(57) **Zusammenfassung**

Die vorliegende Erfindung betrifft eine Anordnung mit einer Frontsäule (10) für einen Karosserierahmen eines Kraftfahrzeugs, wobei die Frontsäule (10) in Querrichtung des Kraftfahrzeugs ein Außenteil (11) und ein Innenteil (12) aufweist, und mit einem am Außenteil (11) der Frontsäule mit mindestens einem Befestigungselement (6, 7, 15) befestigten Türscharnier (4) , wobei zur Halterung des Türscharniers (4) am Außenteil (11) der Frontsäule (10) mindestens ein Verstärkungselement (14) vorgesehen ist. Erfindungsgemäß ist vorgesehen, daß ein starres Verbindungselement (20, 30) zwischen dem Außenteil (11) und dem Innenteil (12) der Frontsäule (10) vorgesehen ist, wobei das Verbindungselement (20, 30) mittels des mindestens einen Befestigungselements (6, 7, 15) für das Türscharnier (4) am Verstärkungselement (14) befestigt ist.

## Beschreibung

Die vorliegende Erfindung betrifft eine Anordnung mit einer Frontsäule für einen Karosserierahmen eines Kraftfahrzeugs nach dem Oberbegriff des Anspruchs 1.

Eine gattungsgemäße Anordnung ist beispielsweise aus der DE 32 22 807 A1 bekannt. Dabei handelt es sich um die Befestigung eines Bauteils insbesondere eines Scharniers, an der Türsäule eines Kraftfahrzeugs, wobei zwischen der Scharnierbefestigung und dem Außenteil der Türsäule ein Verstärkungsblech zur Halterung des Bauteils vorgesehen ist, welches mit dem Außenteil der Türsäule verschweißt ist.

Aus der DE 36 22 188 A1 ist eine Verbindungskonstruktion zwischen Frontsäulen und einer Stirnwand in einem Fahrzeug bekannt. Dabei ist innerhalb der Frontsäule ein Verstärkungselement vorgesehen, welches sich quer durch den von der Frontsäule gebildeten Hohlraum erstreckt und zwischen dem Außenteil und dem Innenteil der Frontsäule über Flansche verschweißt ist. Die Gesamtkonstruktion ist jedoch sehr aufwendig. Das Verstärkungselement sorgt lediglic für eine gewisse Verdrehsteifigkeit der Frontsäule, wodurch die Querschnittsverformung der Frontsäule erschwert wird, was wiederum ein Absenken der Tür zu unterbinden hilft.

Die DE 40 16 730 C2 beschreibt eine Tragsäule für einen Karosserierahmen eines Kraftfahrzeuges, welcher die Form eines säulenartigen Hohlkörpers hat, der aus wenigstens zwei Profilschalen besteht und einem sich in Längsrichtung des Hohlkörpers erstreckendes Rohr sowie Mittel zur Fixierung einer definierten Lage des Rohrs aufweist. Dies bewirkt, daß bei Roll-over-Belastungen um eine Achse sowie bei Frontalaufprallbelastungen die gesamte Deformationsenergie von der Vorderwandsäule aufgefangen wird, ohne daß diese nennenswert verformt werden soll. Auch diese Konstruktion, insbesondere die Einarbeitung des Rohres, ist besonders aufwendig. Eine ähnliche Konstruktion ist in der JP 8276864 A beschrieben.

In der JP 922662 A ist ferner ein Träger mit einem im wesentlichen dreieckigen Verstärkungselement beschrieben, welcher bei einer Belastung der Tragsäule die einwirkenden Kräfte aufnehmen soll, so daß diese sich nicht in Richtung der Fahrgastzelle verbiegt.

Alle die vorher beschriebenen Konstruktionen sind vergleichsweise aufwendig. Sie dienen ferner zwar der Aufnahme von Kräften, die bei Frontal- oder seitlichem Au prall auf ein Kraftfahrzeug einwirken. Jedoch führt ein Frontalaufprall zu einem horizontalen Versatz zwischen der Kraftfahrzeugtür und dem oberen Ende des Längsträgers. Dieser Versatz ist darauf zurückzuführen, daß die Frontsäule an ihrem unteren Ende besser faltet als an ihrem oberen Ende. Dieser horizontale Versatz verursacht ein Moment, welches den Türdichtungsflansch beansprucht, woraus eine Aufbiegebeanspruchung für die entsprechende Kraftfahrzeugtür resultiert.

Die Aufgabe der vorliegenden Erfindung besteht somit darin, eine Anordnung der obengenannten Art bereitzustellen, welche das durch den horizontalen Versatz zwischen Kraftfahrzeugtür und oberem Ende der Frontsäule verursachte Moment aufnimmt und die Aufbiegebeanspruchung der Tür reduziert.

Die Lösung besteht in einer Anordnung mit den Merkmalen des Anspruchs 1.

Erfindungsgemäß ist also vorgesehen, daß ein starres Verbindungselement zwischen dem Außenteil und dem Innenteil der Frontsäule vorgesehen ist, wobei das Verbindungselement mit demselben Befestigungselement am Außenteil der Frontsäule befestigt ist, mit dem auch das Türscharnier befestigt ist. Dieses Bauteil nimmt die Kräfte auf, die durch den horizontalen Versatz zwischen Kraftfahrzeugtür und oberem Ende der Frontsäule entstehen. Dadurch wird der Türdichtungsflansch weniger beansprucht und somit entlastet, so daß die Aufbiegebeanspruchung der Kraftfahrzeugtür reduziert wird.

Vorteilhafte Weiterbildungen ergeben sich aus den Unteransprüchen. Eine vorteilhafte Ausführungsform sieht vor, daß das Verbindungselement eine Hülse ist, welche etwa senkrecht zum Außenteil der Frontsäule angeordnet ist und mittels einer Schraub- oder Nietverbindung am Innenteil der Frontsäule befestigt ist. Das starre Verbindungselement kann aber auch ein flaches Blech oder dergleichen sein, welches zwei Verbindungsflansche aufweist, mittels derer es am Außenteil beziehungsweise am Innenteil der Frontsäule befestigt ist.

Damit stehen zwei besonders einfache und kostengünstige Bauteilvarianten zur Verfügung, die beide mittels des Befestigungselements für das Türscharnier fixiert werden können. Dies ermöglicht eine konstruktiv besonders einfache Verstärkung der Frontsäule.

Das Verbindungselement ist an seinem anderen Ende an der Innenwand der Frontsäule befestigt. Als Innenwand der Frontsäule kann auch die innere Wandung des Radhauses des linken bzw. rechten Vorderrades des Kraftfahrzeugs liegen.

Das Verbindungselement, insbesondere die Hülse, ist vorzugsweise durch Schrauben oder Nieten an der Außen- bzw. Innenwand der Frontsäule befestigt. Wird als Verbindungselement ein flaches Blech verwendet, kann dieses an der Innenwand der Frontsäule auch mittels Schweißen befestigt sein.

Ausführungsbeispiele der vorliegenden Erfindung werden im Folgenden anhand der beigefügten Zeichnung näher beschrieben. Es zeigen:
- Figur 1: eine schematische, teilweise geschnittene Darstellung einer Frontsäule mit einer ersten Ausführungsform eines Verbindungselements;
- Figur 2: eine schematische, teilweise geschnittene Darstellung einer Frontsäule mit einer zweiten Ausführungsform eines Verbindungselements;
- Figur 3: eine schematische Darstellung des horizontalen Versatzes zwischen Tür und Frontsäule bei einem Frontalaufprall.

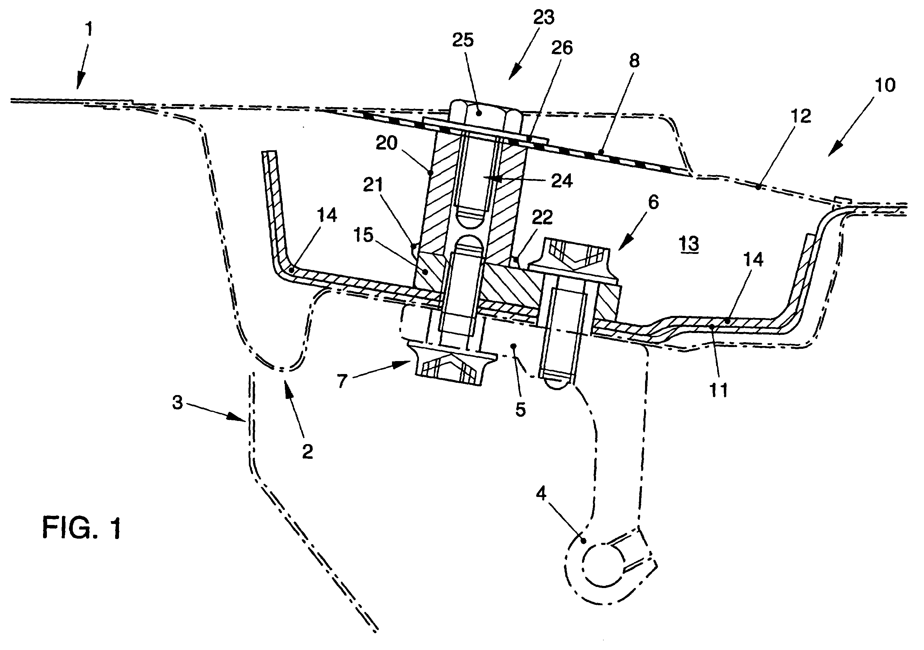

Figur 1 zeigt schematisch eine teilweise geschnittene Darstellung durch eine Frontsäule 10 eines Kraftfahrzeugs. Zur Orientierung sind andeutungsweise noch die Stirnwand 1 der Karosserie, die äußere Kontur 2 des Seitenteils sowie das Stegblech 3 des Kotflügels dargestellt. Die Frontsäule 10 besteht aus einem Außenteil 11 und einem Innenteil 12, die zusammen einen Hohlraum 13 umschließen. Das nur andeutungsweise dargestellte Türscharnier 4 ist über ein Sockelelement 5 mittels zweier Schraubverbindungen 6 und 7 an der Außenseite 11 der Frontsäule befestigt. Entlang der Innenfläche der Außenseite 11 ist eine Verstärkungsplatte 14 vorgesehen, die zur Verstärkung der Befestigung des Türscharniers 4 dient. Dabei dient die Verstärkungsplatte 14 zur Halterung des Türscharniers 4. An der Verstärkungsplatte 14, zum Innenraum 13 der Frontsäule 10 gewandt, ist ferner eine Gewindeplatte 15 vorgesehen, die zur Halterung der Schrauben 6 und 7 dient.

Ferner ist ein Verbindungselement 20 in Form einer Hülse vorgesehen, welches etwa im rechten Winkel zur Scharnierplatte 15 angeordnet ist und den Innenraum 13 der Frontsäule 10 vollständig durchsetzt. Die Hülse 20 ist mittels Schweißpunkten 21 und 22 an der Gewindeplatte 15 fixiert und mittels einer Schraubverbindung 23 an dem Innenteil 12 der Frontsäule 10 befestigt. Dabei ist zwischen dem Kopf 25 der Schraube 24 der Schraubverbindung 23 und der Innenseite 12 der Frontsäule 10 eine Unterlegscheibe 26 vorgesehen.

Aus dem Ausführungsbeispiel in Figur 1 ist ferner zu entnehmen, daß die Hülse 20 zur Herstellung der starren Verbindung ferner an der Innenwand eines Radhauses 8 für das linke bzw. rechte Vorderrad befestigt ist. Diese Innenwand 8 des Radhauses bildet gleichzeitig die Innenseite 12 der Frontsäule 10.

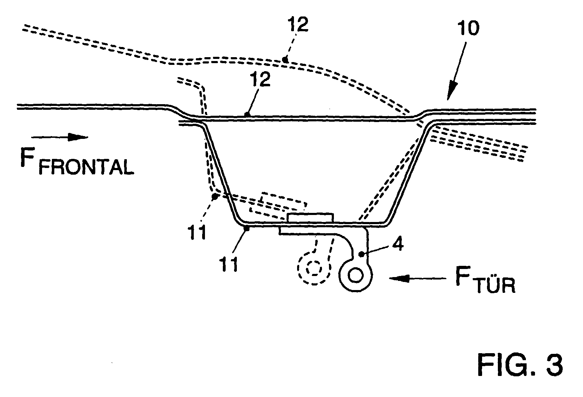

Die Wirkung des Verbindungselements 20 ist schematisch in Figur 3 dargestellt. Figur 3 zeigt die Auswirkungen eines Frontalzusammenpralls auf eine gattungsgemäße Frontsäule. Da der untere Teil der Frontsäule besser faltet als der obere Teil, führt dies zu einem horizontalen Versatz zwischen der Tür und dem oberen Teil der Frontsäule. Dadurch wird ein Moment verursacht, welches auf die Türdichtungsflansche wirkt und insgesamt eine Aufbiegebeanspruchung für die Tür darstellt. Falls eine starre Innenverbindung 20 zwischen dem Außenteil 11 und dem Innenteil 12 vorgesehen ist, nimmt dieses das durch den horizontalen Versatz entstehende Moment auf, so daß der Türdichtungsflansch entlastet ist und die Aufbiegebeanspruchung insgesamt gering ist.

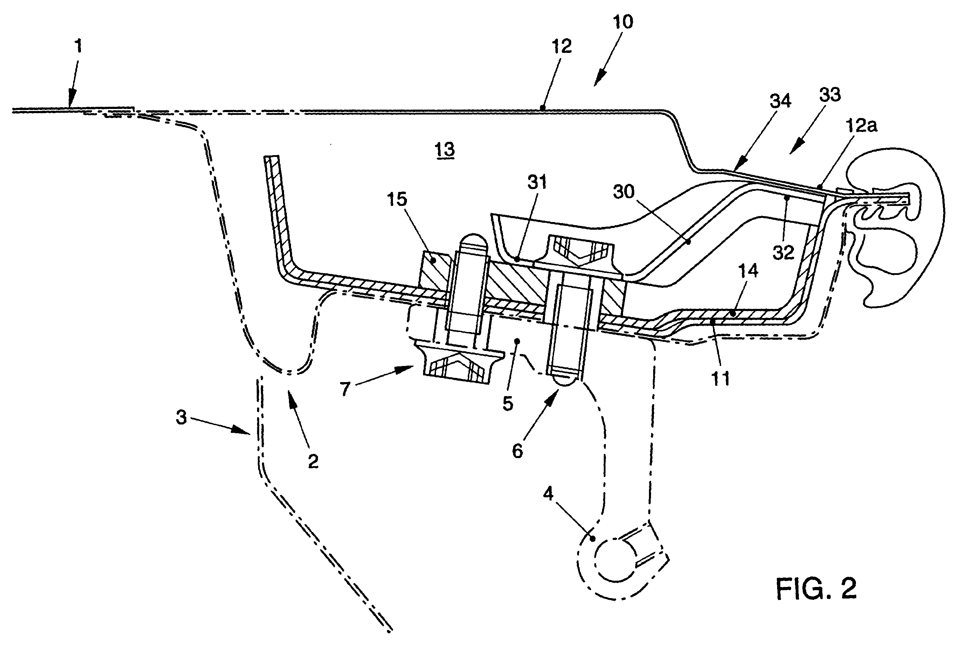

Figur 2 zeigt ebenfalls eine Frontsäule 10 wobei zur weiteren Orientierung noch eine Stirnwand 1 die Außenfläche des Seitenteils 2 sowie das Stegblech 3 eines Kotflügels angedeutet sind. Auch bei diesem Ausführungsbeispiel ist das Türscharnier 4 wie soeben beschrieben befestigt. Als starres Verbindungselement 30 ist nunmehr ein flaches Blech oder dergleichen vorgesehen, welches zweimal abgekantet ist, so daß es zwei Flansche 31 und 32 aufweist. Der Flansch 31 ist mittels der für das Türschamier 4 vorgesehenen Schraubverbindung 6 an der Gewindeplatte 15 fixiert. Der Flansch 32 ist am auslaufenden Ende 12a des Innenteils 12 der Frontsäule 10 durch Schweißen fixiert. Dabei können am Punkt 33 ein oder mehrere Schweißpunkte gesetzt sein. Statt dessen oder zusätzlich kann am Punkt 34 eine Kehlnaht gesetzt sein.

Das Verbindungselement 30 wirkt im wesentlichen wie das Verbindungselement 20, d. h. es nimmt die bei einem horizontalen Versatz zwischen Tür und oberem Ende der Frontsäule entstehenden Kräfte auf, so daß es zumindest zu einer reduzierten Aufbiegebeanspruchung der Kraftfahrzeugtür kommt.

Im vorliegenden Fall wurde beispielhaft die linke Frontseite eines Kraftfahrzeugs beschrieben. Da linke und rechte Frontsäule entlang der Längsachse des Kraftfahrzeugs symmetrisch sind, gelten die vorstehenden Erläuterungen sinngemäß ebenfalls für die rechte Frontsäule.

### BEZUGSZEICHENLISTE

- 1: Stirnwand einer Karosserie
- 2: äußere Kontur eines Seitenteils einer Karosserie
- 3: Stegblech des Kotflügels einer Karosserie
- 4: Türscharnier
- 5: Sockelelement von 4
- 6: Schraubverbindung an 5
- 7: Schraubverbindung an 5
- 10: Frontsäule
- 11: Außenteil von 10
- 12: Innenteil von 10
- 13: Hohlraum von 10
- 14: Verstärkungsplatte
- 15: Gewindeplatte
- 20: Verbindungselement
- 21: Schweißpunkt
- 22: Schweißpunkt
- 23: Schraubverbindung
- 24: Schraube von 23
- 25: Kopf von 24
- 26: Unterlegscheibe von 23
- 30: Verbindungselement
- 31: Flansch von 30
- 32: Flansch von 30
- 33: Schweißpunkt
- 34: Kehlnaht

## Patentansprüche

1. Anordnung mit einer Frontsäule (10) für einen Karosserierahmen eines Kraftfahrzeugs, wobei die Frontsäule (10) in Querrichtung des Kraftfahrzeugs ein Außenteil (11) und ein Innenteil (12) aufweist, und mit einem am Außenteil (11) der Frontsäule mit mindestens einem Befestigungselement (6, 7, 15) befestigten Türscharnier (4) , wobei zur Halterung des Türscharniers (4) am Außenteil (11) der Frontsäule (10) mindestens ein Verstärkungselement (14) vorgesehen ist, **dadurch gekennzeichnet**, daß ein starres Verbindungselement (20, 30) zwischen dem Außenteil (11) und dem Innenteil (12) der Frontsäule (10) vorgesehen ist, wobei das Verbindungselement (20, 30) mittels des mindestens einen Befestigungselements (6, 7, 15) für das Türscharnier (4) am Verstärkungselement (14) befestigt ist.

2. Anordnung nach Anspruch 1, **dadurch gekennzeichnet,** daß das starre Verbindungselement eine Hülse (20) ist, welche etwa senkrecht zum Außenteil (11) der Frontsäule (10) angeordnet ist und mittels einer Schraubverbindung (23) oder Nietverbindung am Innenteil (12) der Frontsäule (10) befestigt ist.

3. Anordnung nach Anspruch 2, **dadurch gekennzeichnet,** daß als Innenteil (12) der Frontsäule eine innere Wandung des Radhauses des linken bzw. rechten Vorderrades des Kraftfahrzeuges dient.

4. Anordnung nach Anspruch 1, **dadurch gekennzeichnet,** daß das starre Verbindungselement ein flaches Blech (30) o. dgl. ist, welches zwei Verbindungsflansche (31, 32) aufweist, mittels derer es am Außenteil (11) bzw. am Innenteil (12) der Frontsäule (10) befestigt ist.

5. Anordnung nach Anspruch 4, **dadurch gekennzeichnet,** daß das flache Blech (30) o. dgl. zur Bildung der Verbindungsflansche zweimal im Winkel von etwa 60° abgekantet ist.

6. Anordnung nach einem der Ansprüche 4 bis 5, **dadurch gekennzeichnet**, daß das flache Blech o. dgl. am Innenteil (12) der Frontsäule (10) durch Schrauben, Nieten und/oder Schweißen befestigt ist.

7. Anordnung nach Anspruch 6, **dadurch gekennzeichnet,** daß das flache Blech o. dgl. mittels ein oder mehrerer Schweißpunkte (33) und/oder mittels ein oder mehrerer Kehlnähte (34) am Innenteil (12) der Frontsäule (10) befestigt ist.
